# EUROPÄISCHE PATENTSCHRIFT

(11) **EP 3 862 144 B1**
(45) Veröffentlichungstag und Bekanntmachung des Hinweises auf die Patenterteilung: **08.11.2023**
(21) Anmeldenummer: 21155534.7
(22) Anmeldetag: 05.02.2021
(51) Int. Cl.: B25J 5/00, B25J 9/16, B25J 15/06, B66F 9/06, B25J 9/04, B25J 13/08, B25J 5/06, B25J 11/00, B25J 19/06

(54) **MANIPULATOR ZUM ANORDNEN AN EINEM FAHRZEUG SOWIE VERFAHREN ZUM BEWEGEN UND/ODER SICHERN EINES MANIPULATORS**
MANIPULATOR FOR MOUNTING ON A VEHICLE AND METHOD FOR MOVING AND/OR SECURING A MANIPULATOR
MANIPULATEUR DESTINÉ À L'AGENCEMENT SUR UN VÉHICULE ET PROCÉDÉ POUR DÉPLACER ET/OU SÉCURISER UN MANIPULATEUR

(30) Priorität: 05.02.2020 DE 102020102877; 14.07.2020 DE 202020104055 U
(43) Veröffentlichungstag der Anmeldung: 11.08.2021
(73) Patentinhaber: BARRUS GmbH, 77933 Lahr (DE)
(72) Erfinder: Merkt, Marius, 79291 Merdingen (DE); Mast, Hermann, 77963 Schwanau (DE)
(74) Vertreter: Klickow & Wetzel PartGmbB

(56) Entgegenhaltungen:
- EP-A1- 3 002 247
- CN-U- 209 989 023
- JP-A- 2001 096 487
- US-A1- 2007 189 888

## Beschreibung

Die Erfindung betrifft einen Manipulator zum Anordnen an einem Fahrzeug, bevorzugt ein Flurförderzeug, insbesondere ein Kommissionierer mit einem Anbauelement zum Befestigen an dem Fahrzeug, mit wenigstens einem Ausleger, der mit einem ersten Ende mit dem Anbauelement verbunden ist, wobei der Ausleger gegenüber dem Anbauelement beweglich ausgeführt ist, mit wenigstens einem Werkzeug, das an einem zweiten, dem ersten Ende gegenüberliegenden Ende des Auslegers vorgesehen ist.

Bekannt sind stationäre Handhabungssysteme, auch Manipulatoren genannt, beispielsweise montiert an einer Decke oder an einem Träger. Sie werden in der Industrie genutzt, um Werkzeuge bereitzustellen oder um Lasten ergonomischer bewegen zu können. Beispielsweise werden Metallbleche, Holzplatten oder dergleichen aufgenommen, bewegt und wieder abgesetzt, um dann bearbeitet oder kommissioniert zu werden. Zur Aufnahme werden Werkezeuge wie Vakuumsauger, Magnete oder spezielle Greifer eingesetzt. Der Hub wird dabei beispielsweise über eine seilgestützte Winde oder einen Vakuumschlauch umgesetzt. Horizontal bewegen lässt sich die Last in der Regel am Werkzeug über einen Schwenkarm oder über einen Scherenausleger.

Die Kommissionierung von Lasten erfolgt auch in Verbindung mit Fahrzeugen wie Flurförderzeugen, wie Hubwagen oder Gabelstapler. Dabei befinden sich auf den Gabeln dann Paletten, beispielsweise in Form von Europaletten, die dann mit den jeweiligen Produkten für das Zusammenstellen einer Lieferung in einem Lager beladen werden.

Hierfür sind beispielsweise aus EP3002247A1, US2007189888A1 und CN209989023U Fahrzeuge mit Manipulatoren bekannt, die Anbauelement zum Befestigen an dem Fahrzeug vor, mit wenigstens einem Ausleger, der mit einem ersten Ende beweglich mit dem Anbauelement verbunden ist, wobei der Ausleger gegenüber dem Anbauelement beweglich ausgeführt ist, mit wenigstens einem Werkzeug, das an einem zweiten, dem ersten Ende gegenüberliegenden Ende des Auslegers vorgesehen ist. US2007189888A1 offenbart einen Manipulator mit den Merkmalen des Oberbegriffs des Anspruches 1.

JP2001096487A offenbart Sensorüberwachungen von Fahrzeugen mit Roboterarmen.

Das Werkzeug befindet sich an einem Ausleger, der händisch bewegt werden kann. Vor und nach der Verwendung des Manipulators muss dieser aus Sicherheitsgründen fest am Fahrzeug verriegelt sein und sich in einer definierten gesicherten Stellung befinden. Ansonsten könnte der Ausleger und/oder das Werkzeug bzw. dessen Bestandteile wie Seil oder Vakuumschlauch undefiniert schwingen und dadurch ein Sicherheitsrisiko beim Fahren mit dem Flurförderzeug darstellen. Während der Verwendung des Manipulators ist es weiterhin notwendig, dass das der Fahrbetrieb des Fahrzeugs gesperrt ist.

Der Ausleger muss dazu bei den Manipulatoren durch den Bediener manuell in diese definierte gesicherte Stellung gebracht werden. Bei einem System mit Scherenausleger muss dieser vom Bediener zurückgedrückt werden bis dieser verriegelt, wenn er komplett eingefahren ist. Dieses setzt auf Grund des Scherenaufbaus einen nicht unerheblichen Kraftaufwand voraus. Bei einem System mit Ausleger muss dieser in die definierte gesicherte Stellung geschwenkt werden.

Im Anschluss an das Bewegen in die definierte gesicherte Stellung müssen das Werkzeug bzw. die Hubvorrichtung gesichert werden. Diese erfolgt meistens manuell mit mehreren Handgriffen und in einer für den Bediener nicht ergonomischen Position. Erst wenn alle Komponenten gesichert sind, wird das Fahrzeug wieder zur Fahrt freigegeben. Dabei muss gewährleistet sein, dass das das Werkzeug auch während des Fahrbetriebs in der gesicherten Position verbleibt.

Das Entsichern erfolgt in umgekehrter Reihenfolge. Beide Systeme benötigen dadurch einen entsprechenden Zeitaufwand, um den Ausleger zu sichern und der Bediener muss darauf achten die Arbeitsfolge einzuhalten.

Aufgabe der Erfindung ist daher, den Manipulator so weiter zu entwickeln, dass die vorgenannten Nachteile wenigstens teilweise überwunden werden.

Gelöst wird die Aufgabe in einer ersten erfindungsgemäßen Lösung dadurch, dass ein Bewegungsantrieb für den Ausleger vorgesehen ist, der mit wenigstens einem Teil des Auslegers so verbunden ist, dass mit dem Bewegungsantrieb der Teil des Auslegers zwangsgeführt in eine gesicherte Position bewegbar ist, dass die Bewegung des Auslegers in die gesicherte Position zwangsgeführt erfolgt, und
dass der Bewegungsantrieb vom Ausleger trennbar ist, so dass der Ausleger in einem getrennten Zustand von Bewegungsantrieb durch den Bediener händisch antriebslos bewegbar ist.

Es hat sich überraschender Weise gezeigt, dass durch das Vorsehen der zwangsgeführten automatisierten Bewegung, eine erhebliche Rüstzeitersparnis zwischen dem Fahrbetrieb und Ladebetrieb erreichbar ist.

Eine weitere Lehre sieht vor, dass es sich bei dem Ausleger um einen Knickarm handelt. Vorteilhaft ist dabei, dass der Knickarm wenigstens einen Hauptarm und wenigstens einen daran beweglich gegenüber dem Hauptarm angeordneten Zusatzarm aufweist, wobei das Werkzeug bevorzug an dem Zusatzarm angeordnet ist. Eine weitere Lehre sieht vor, dass es sich bei dem Teil des Auslegers um den Hauptarm des Knickarms handelt. Hierdurch ist es auf einfache Weise möglich, den Ausleger in die gewünschte Position zu überführen.

Eine weitere Lehre der Erfindung sieht vor, dass das Werkzeug ein Hubwerkzeug, bevorzugt ein Vakuum-Sauggreifer, ist. Insbesondere hinsichtlich des Vakuumsauggreifers hat sich gezeigt, dass dieser auf besondere einfache Weise zu sichern ist, insbesondere indem sich der Vakuum-Sauggreifer auf einer definierten Oberfläche ansaugt. Hierdurch wird insbesondere während des Fahrbetriebs auf einfache Weise die sichere Position beibehalten.

Eine weitere Lehre sieht vor, dass wenigstens ein Sensor vorgesehen ist, mit dem das Erreichen des Auslegers, bevorzugt des Hauptarms und/oder des Zusatzarms des Knickarms in einer vorgegebenen Position erfassbar ist, und/oder dass wenigstens ein Sensor, bevorzugt ein Unterdrucksensor, vorgesehen ist, mit dem ein Arretieren des Werkzeugs an einer vorgegebenen Position erfassbar ist. Hierdurch lässt sich die Überwachung der Positionierung einfach gewährleisten. Insbesondere durch den Sensor zur Überwachung des Werkzeugs, insbesondere als Unterdrucksensor, wird es auch auf einfache Weise weiterhin möglich zu überwachen, ob sich das Werkzeug in der gesicherten Position während des Fahrbetriebs befindet.

Eine weitere Lehre sieht vor, dass wenigstens eine Steuerung vorgesehen ist, die so eingerichtet ist, dass die Steuerung anhand der Position des Auslegers eine Fahrbarkeit des Fahrzeugs sperrt oder frei gibt, wobei die Steuerung bevorzugt mit wenigstens einem der zuvor genannten Sensoren verbunden ist.

Eine weitere Lehre sieht vor, dass wenigstens ein Sensor vorgesehen ist, mit dem ein Fahrzustands des Fahrzeugs erfassbar ist. Hierdurch kann auf einfache Weise der Fahrzustand des Fahrzeugs erfasst werden.

Eine weitere Lehre sieht vor, dass wenigstens eine Steuerung vorgesehen ist, die so eingerichtet ist, dass die Steuerung anhand des Fahrzustands des Fahrzeugs die Bewegbarkeit des Auslegers und/oder des Werkzeugs sperrt oder frei gibt, wobei die Steuerung bevorzugt mit dem wenigstens einen Sensor verbunden ist. Hierdurch kann auf einfache Weise der Ablauf der Zwangsführung und/oder die Sicherung des Werkzeugs gewährleistet werden.

Eine weitere Lehre sieht vor, dass es sich bei dem Bewegungsantrieb um einen Elektroantrieb, einen hydraulischen Antrieb und/oder einen mechanischen Antrieb handelt.

Eine weitere Lehre sieht vor, dass der Zusatzarm gegenüber dem Hauptarm durch den Bediener händisch antriebslos bewegbar ist. Eine weitere Lehre sieht vor, dass der Bewegungsantrieb vom Ausleger trennbar ist, so dass der Ausleger in einem getrennten Zustand von Bewegungsantrieb durch den Bediener händisch antriebslos bewegbar ist. Hierdurch ist ein einfacher Aufbau möglich bei gleichzeitiger Beibehaltung der Funktionalität und der Vereinfachung durch die Zwangsführung.

Ein Manipulator, insbesondere ein zuvor beschriebener Manipulator, der an einem Fahrzeug, bevorzugt ein Flurförderzeug, insbesondere ein Kommissionierer, angeordnet ist, ein Anbauelement zum Befestigen an dem Fahrzeug, wenigstens einen Ausleger, der mit einem ersten Ende mit dem Anbauelement verbunden ist, wobei der Ausleger gegenüber dem Anbauelement beweglich ausgeführt ist, und wenigstens ein Werkzeug, das an einem zweiten, dem ersten Ende gegenüberliegenden Ende des Auslegers vorgesehen ist, aufweist, lässt sich wie folgt bewegen, indem wenigstens ein Teil des Auslegers mit einem ein Bewegungsantrieb verbunden wird, und indem mit dem Bewegungsantrieb der Teil des Auslegers zwangsgeführt in eine gesicherte Position zwangsgeführt bewegt wird. Bevorzugt wird der Ausleger nach Erreichen der gesicherten Position in dieser arretiert. Vorteilhaft ist dabei, dass der Knickarm wenigstens einen Hauptarm und wenigstens einen daran beweglich gegenüber dem Hauptarm angeordneten Zusatzarm aufweist, wobei das Werkzeug bevorzug an dem Zusatzarm angeordnet ist. Weiterhin bevorzugt handelt es sich bei dem Teil des Auslegers um den Hauptarm des Knickarms.

Es hat sich überraschender Weise gezeigt, dass durch das zwangsgeführte automatisierte Bewegen, eine erhebliche Rüstzeitersparnis zwischen dem Fahrbetrieb und Ladebetrieb erreichbar ist.

Vorteilhaft ist dabei, dass das Erreichen des Auslegers in einer vorgegebenen Position mit wenigstens einem Sensor erfasst wird, und/oder dass das Arretieren des Werkzeugs an einer vorgegebenen Position mit wenigstens einem Sensor, bevorzugt ein Unterdrucksensor, erfasst wird. Vorteilhaft ist weiterhin, dass als Werkzeug ein Hubwerkzeug, bevorzugt ein Vakuum-Sauggreifer, verwendet wird. Insbesondere hinsichtlich des Vakuumsauggreifers hat sich gezeigt, dass dieser auf besondere einfache Weise gesichert wird, insbesondere indem der Vakuum-Sauggreifer auf einer definierten Oberfläche ansaugt wird. Hierdurch wird insbesondere während des Fahrbetriebs auf einfache Weise die sichere Position beibehalten.

Vorteilhaft ist dabei, dass anhand der Position des Auslegers eine Steuerung eine Fahrbarkeit des Fahrzeugs sperrt oder frei gibt. Bevorzugt erfolgt dieses basierend auf den Daten wenigstens eines der zuvor genannten Sensoren, besonders bevorzugt basierend auf den Daten beider zuvor genannten Sensoren. Hierdurch lassen sich die Überwachung der Positionierung einfach gewährleisten. Insbesondere durch den Sensor zur Überwachung des Werkzeugs, insbesondere als Unterdrucksensor, wird es auch auf einfache Weise weiterhin möglich zu überwachen, ob sich das Werkzeug in der gesicherten Position während des Fahrbetriebs befindet.

Vorteilhaft ist dabei, dass mit wenigstens einem Sensor ein Fahrzustands des Fahrzeugs erfasst wird. Hierdurch kann auf einfache Weise der Fahrzustand des Fahrzeugs erfasst werden.

Vorteilhaft ist dabei, dass eine Steuerung anhand des Fahrzustands des Fahrzeugs die Bewegbarkeit des Auslegers und/oder des Werkzeugs sperrt oder frei gibt, wobei die Steuerung bevorzugt mit dem wenigstens einen Sensor verbunden wird. Bevorzugt erfolgt dieses basierend auf den Daten wenigstens eines der zuvor genannten Sensoren.

Vorteilhaft ist dabei, dass eine der Bewegungsantrieb vom Ausleger getrennt wird, so dass der Ausleger in einem getrennten Zustand von Bewegungsantrieb durch den Bediener händisch antriebslos bewegbar ist.

Gelöst wird die Aufgabe in einer zweiten erfindungsgemäßen Lösung dadurch, dass das Werkzeug ein Vakuum-Sauggreifer ist, dass wenigstens ein Unterdrucksensor vorgesehen ist, mit dem ein Arretieren des Werkzeugs an einer vorgegebenen Position erfassbar ist.

Überraschender Weise hat sich gezeigt, dass durch die Kombination des Vakuumsauggreifers mit dem Unterdrucksensor dieser auf besondere einfache und im Fahrbetrieb sichere Weise zu sichern ist, insbesondere indem sich der Vakuum-Sauggreifer auf einer definierten Oberfläche ansaugt.

Hierdurch wird insbesondere während des Fahrbetriebs auf einfache Weise die sichere Position beibehalten.

Eine weitere Lehre sieht vor, dass es sich bei dem Ausleger um einen Knickarm handelt. Vorteilhaft ist dabei, dass der Knickarm wenigstens einen Hauptarm und wenigstens einen daran beweglich gegenüber dem Hauptarm angeordneten Zusatzarm aufweist, wobei das Werkzeug bevorzug an dem Zusatzarm angeordnet ist. Eine weitere Lehre sieht vor, dass ein Bewegungsantrieb für den Ausleger vorgesehen ist, der mit wenigstens einem Teil des Auslegers so verbunden ist, dass mit dem Bewegungsantrieb der Teil des Auslegers zwangsgeführt in eine gesicherte Position bewegbar ist. Vorteilhaft ist dabei, dass es sich bei dem Teil des Auslegers um den Hauptarm des Knickarms handelt. Es hat sich überraschender Weise gezeigt, dass durch das Vorsehen der zwangsgeführten automatisierten Bewegung, eine erhebliche Rüstzeitersparnis zwischen dem Fahrbetrieb und Ladebetrieb erreichbar ist. Insbesondere durch den Knickarm ist es auf einfache Weise möglich, den Ausleger in die gewünschte Position zu überführen.

Eine weitere Lehre sieht vor, dass der Zusatzarm gegenüber dem Hauptarm durch den Bediener händisch antriebslos bewegbar ist. Eine weitere Lehre sieht vor, dass der Bewegungsantrieb vom Ausleger trennbar ist, so dass der Ausleger in einem getrennten Zustand von Bewegungsantrieb durch den Bediener händisch antriebslos bewegbar ist. Hierdurch ist ein einfacher Aufbau möglich bei gleichzeitiger Beibehaltung der Funktionalität und der Vereinfachung durch die Zwangsführung.

Eine weitere Lehre sieht vor, dass es sich bei dem Bewegungsantrieb um einen Elektroantrieb, einen hydraulischen Antrieb und/oder einen mechanischen Antrieb handelt.

Eine weitere Lehre sieht vor, dass wenigstens ein Sensor vorgesehen ist, mit dem das Erreichen des Auslegers, bevorzugt des Hauptarms und/oder des Zusatzarms des zuvor beschriebenen Knickarms, in einer vorgegebenen Position erfassbar ist. Hierdurch lässt sich die Überwachung der Positionierung einfach gewährleisten.

Eine weitere Lehre sieht vor, dass wenigstens eine Steuerung vorgesehen ist, die so eingerichtet ist, dass die Steuerung anhand der Ansaugung des Werkzeugs und/oder der Position des Auslegers eine Fahrbarkeit des Fahrzeugs sperrt oder frei gibt, wobei die Steuerung bevorzugt mit dem wenigstens einen Sensor verbunden ist. Hierdurch kann auf einfache Weise die Sicherung des Werkzeugs gewährleistet werden.

Eine weitere Lehre sieht vor, dass wenigstens ein Sensor vorgesehen ist, mit dem ein Fahrzustands des Fahrzeugs erfassbar ist. Hierdurch kann auf einfache Weise der Fahrzustand des Fahrzeugs erfasst werden. Eine weitere Lehre sieht vor, dass wenigstens eine Steuerung vorgesehen ist, die so eingerichtet ist, dass die Steuerung anhand des Fahrzustands des Fahrzeugs die Bewegbarkeit des Auslegers und/oder des Werkzeugs sperrt oder frei gibt. Hierdurch kann auf einfache Weise der Ablauf der Zwangsführung und/oder die Sicherung des Werkzeugs gewährleistet werden.

Ein Manipulator, insbesondere ein zuvor beschriebener Manipulator, der an einem Fahrzeug, bevorzugt ein Flurförderzeug, insbesondere ein Kommissionierer, angeordnet ist, ein Anbauelement zum Befestigen an dem Fahrzeug, wenigstens einen Ausleger, der mit einem ersten Ende mit dem Anbauelement verbunden ist, wobei der Ausleger gegenüber dem Anbauelement beweglich ausgeführt ist, und wenigstens ein Werkzeug, das an einem zweiten, dem ersten Ende gegenüberliegenden Ende des Auslegers vorgesehen ist, aufweist, lässt sich wie folgt sichern, indem das Werkzeug an einer vorgegebenen Position an einer Oberfläche angesaugt wird, und indem das Ansaugen des Werkzeugs an der einer vorgegebenen Position mit wenigstens einem Sensor, bevorzugt ein Unterdrucksensor, erfasst wird.

Überraschender Weise hat sich gezeigt, dass durch die Kombination des Vakuumsauggreifers mit dem Unterdrucksensor dieser auf besondere einfache und im Fahrbetrieb sichere Weise zu sichern ist, insbesondere indem sich der Vakuum-Sauggreifer auf einer definierten Oberfläche ansaugt. Hierdurch wird insbesondere während des Fahrbetriebs auf einfache Weise die sichere Position beibehalten.

Vorteilhaft ist dabei weiterhin, dass wenigstens ein Teil des Auslegers mit einem ein Bewegungsantrieb verbunden wird, und indem mit dem Bewegungsantrieb der Teil des Auslegers zwangsgeführt in eine gesicherte Position zwangsgeführt bewegt wird. Bevorzugt wird der Ausleger nach Erreichen der gesicherten Position in dieser arretiert. Vorteilhaft ist dabei, dass der Knickarm wenigstens einen Hauptarm und wenigstens einen daran beweglich gegenüber dem Hauptarm angeordneten Zusatzarm aufweist, wobei das Werkzeug bevorzug an dem Zusatzarm angeordnet ist. Weiterhin bevorzugt handelt es sich bei dem Teil des Auslegers um den Hauptarm des Knickarms.

Es hat sich überraschender Weise gezeigt, dass durch das zwangsgeführte automatisierte Bewegen, eine erhebliche Rüstzeitersparnis zwischen dem Fahrbetrieb und Ladebetrieb erreichbar ist.

Vorteilhaft ist dabei, dass das Erreichen des Auslegers in einer vorgegebenen Position mit wenigstens einem Sensor erfasst wird.

Vorteilhaft ist dabei, dass anhand der Position des Auslegers eine Steuerung eine Fahrbarkeit des Fahrzeugs sperrt oder frei gibt. Bevorzugt erfolgt dieses basierend auf den Daten wenigstens eines der zuvor genannten Sensoren, besonders bevorzugt basierend auf den Daten beider zuvor genannten Sensoren. Hierdurch lassen sich die Überwachung der Positionierung einfach gewährleisten. Insbesondere durch den Sensor zur Überwachung des Werkzeugs, insbesondere als Unterdrucksensor, wird es auch auf einfache Weise weiterhin möglich zu überwachen, ob sich das Werkzeug in der gesicherten Position während des Fahrbetriebs befindet.

Vorteilhaft ist dabei, dass mit wenigstens einem Sensor ein Fahrzustands des Fahrzeugs erfasst wird. Hierdurch kann auf einfache Weise der Fahrzustand des Fahrzeugs erfasst werden.

Vorteilhaft ist dabei, dass eine Steuerung anhand des Fahrzustands des Fahrzeugs die Bewegbarkeit des Auslegers und/oder des Werkzeugs sperrt oder frei gibt, wobei die Steuerung bevorzugt mit dem wenigstens einen Sensor verbunden wird. Bevorzugt erfolgt dieses basierend auf den Daten wenigstens eines der zuvor genannten Sensoren.

Vorteilhaft ist dabei, dass eine der Bewegungsantrieb vom Ausleger getrennt wird, so dass der Ausleger in einem getrennten Zustand von Bewegungsantrieb durch den Bediener händisch antriebslos bewegbar ist.

Nachfolgend wird ein bevorzugtes Ausführungsbeispiel in Verbindung mit einer Zeichnung dargestellt. Dabei zeigen
- Figur 1: eine erste räumliche Seitenansicht eines Fahrzeugs mit einem daran angeordneten erfindungsgemäßen Manipulator,
- Figur 2: eine weitere räumliche Ansicht zu Figur 1 mit dem erfindungsgemäßen Manipulator in gesicherter Fahrposition,
- Figur 3: eine Draufsicht auf ein Fahrzeug mit einem erfindungsgemäßen Manipulator, wobei der Bewegungsbereich eines am Manipulator angeordneten Werkzeugs dargestellt ist,
- Figur 4: eine räumliche Ansicht analog Figur 1 mit einem erfindungsgemäßen Manipulator im Betrieb,
- Figur 5: eine weitere räumliche Ansicht analog Figur 4,
- Figur 6: eine Draufsicht zu Figur 5,
- Figuren 7-9: Ansichten zur Durchführung eines Ladevorgangs von einer Palette im Lager auf eine Palette auf dem Fahrzeug mittels des erfindungsgemäßen Manipulators.

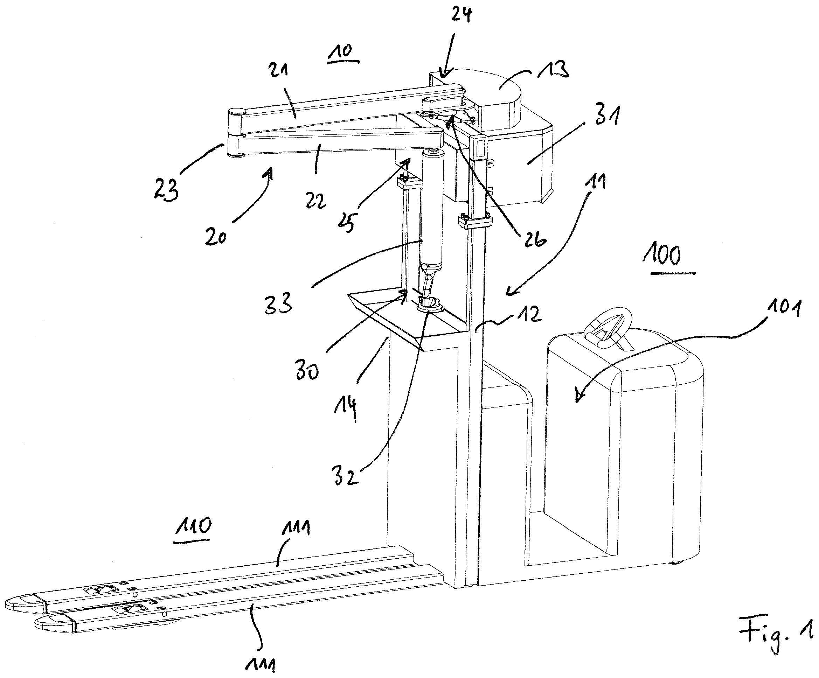

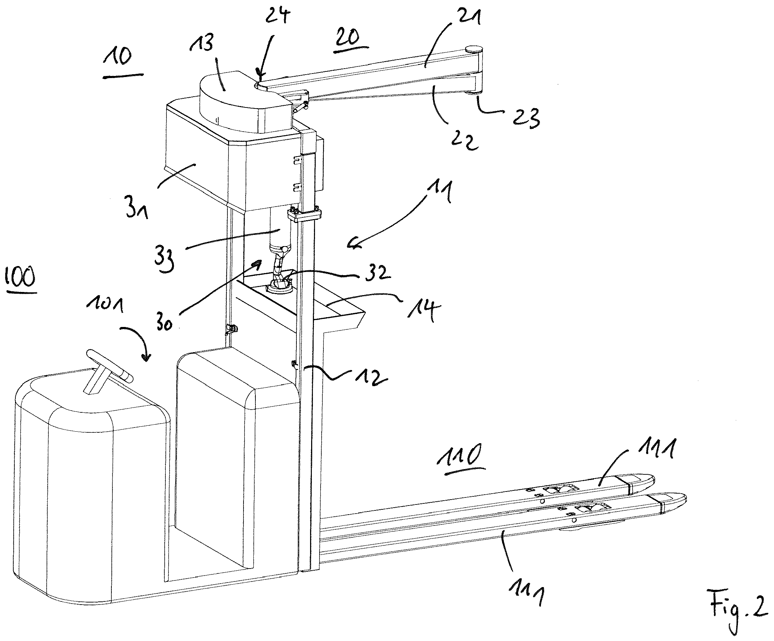

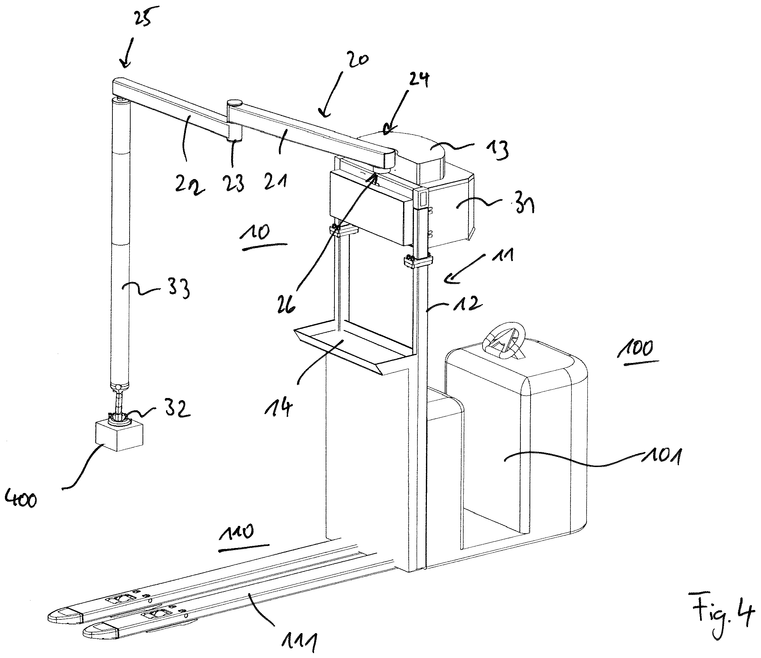

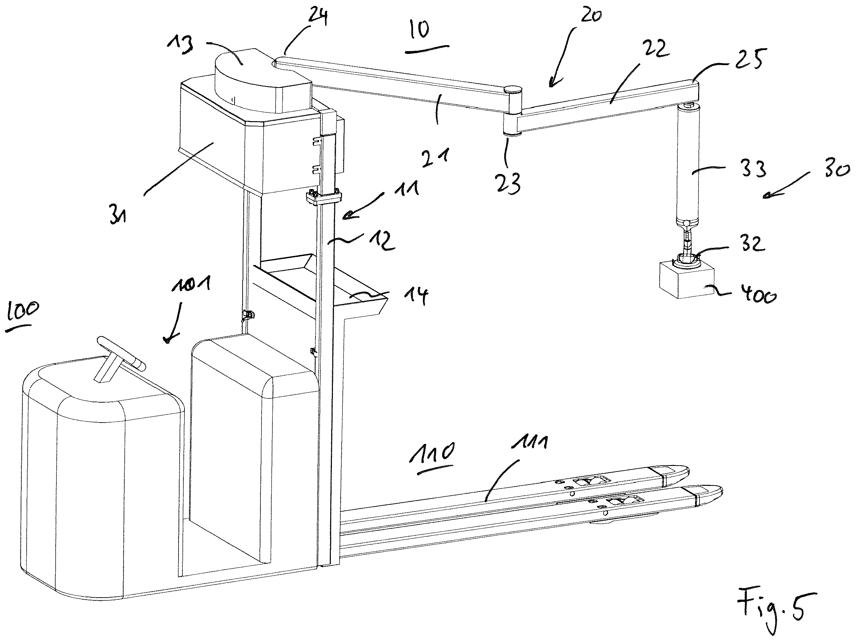

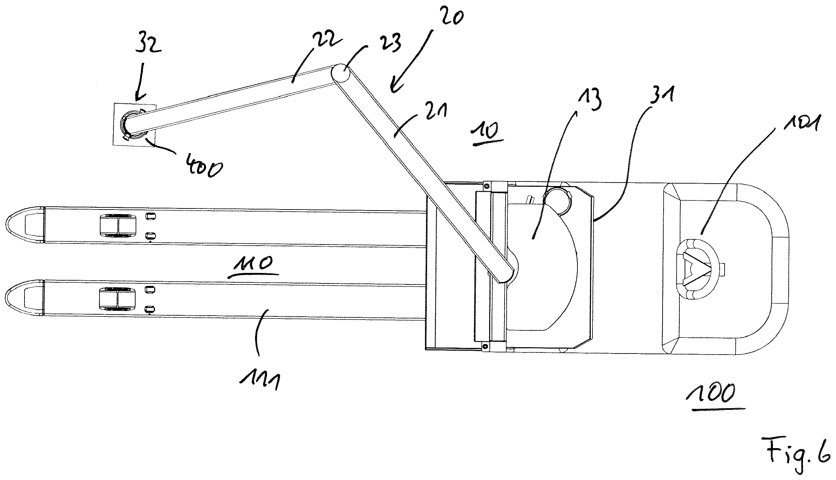

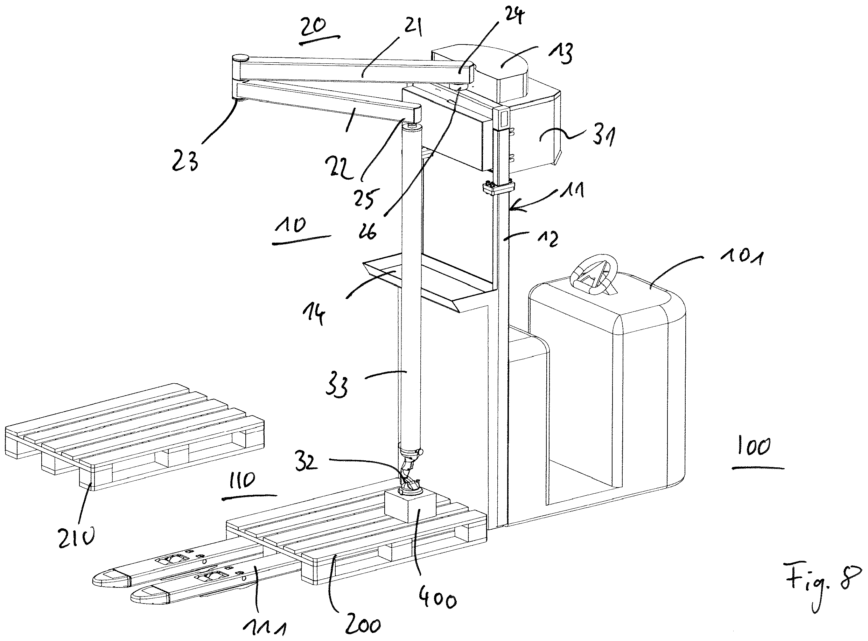

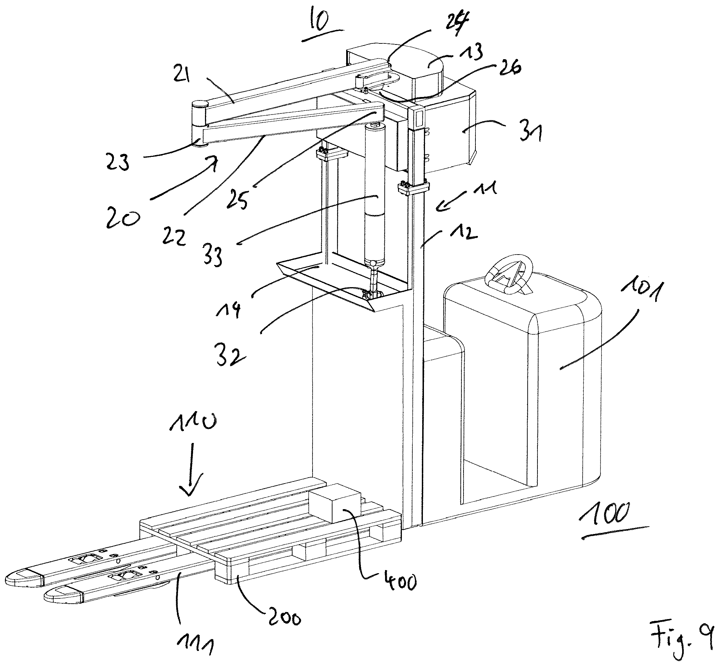

Figuren 1 bis 9 zeigen ein Fahrzeug, hier ein Flurförderzeug 100 mit einem erfindungsgemäßen Manipulator 10. Das Flurförderzeug 100 ist ein Fördermittel für horizontalen Transport von Gütern, die für gewöhnlich zu ebener Erde eingesetzt werden. Das Flurförderzeug 100 weist einen Ladebereich 110 auf, auf dem beispielsweise Paletten 200 anordbar sind. Das Flurförderzeug 100 ist hier als ein angetriebener Hubwagen, beispielsweise ein Elektro-Hubwagen, ausgeführt. Es weist einen Fahrstand 101 auf.

Besonders bevorzugt ist hier das Flurförderzeug 100 als Niederflurhubwagen ausgeführt. Der Ladebereich 110 weist dabei flache Gabeln 111 auf, die zwischen einer erhöhten Position und einer abgesenkten Position (hier dargestellt in Figur 1) vertikal bewegbar sind. Die einzelnen Gabeln 111 sind dabei so beanstandet, dass sie beispielsweise in Europaletten 200 an einer Seite, hier beispielsweise der kurzen Seite, eingreifen können. Andere Anordnungen der Gabeln 111 und der Abstände zueinander sind möglich.

In einem Fahrzustand sind die Gaben 111 so angehoben, dass die Palette 200 frei über dem Boden befindlich ist. Während des Ladens oder Entladen können die Gaben 111 beispielsweise auch abgesenkt sein, sodass die Palette 200 dann auf Boden aufsteht.

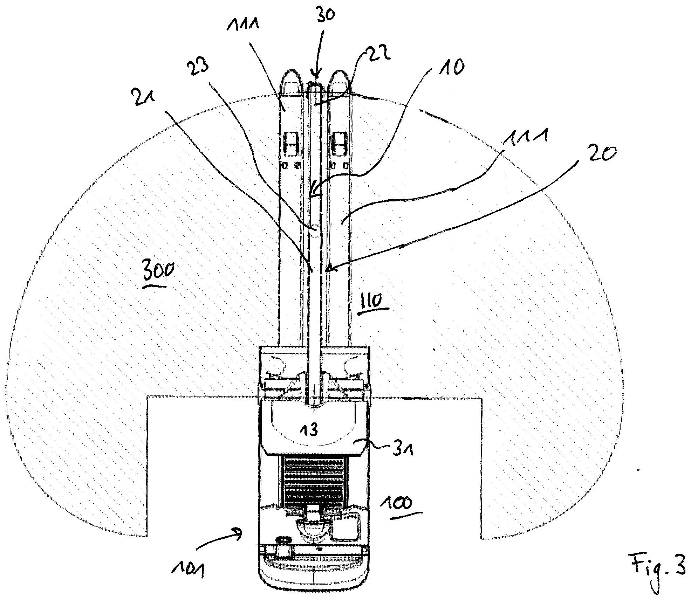

Zum Be- und Entladen ist ein Manipulator 10 vorgesehen. Der Manipulator 10 ist an einem Anbauelement 11, das hier als Gestell 12 ausgeführt ist, am Flurförderzeug 100 angeordnet. An dem Gestell 12 ist eine Basis 13 vorgesehen, an der beweglich ein Ausleger 20 angeordnet ist. Der Ausleger 20 weist hier bevorzugt einen Hauptarm 21 und einen Zusatzarm 22 auf. Der Hauptarm 21 und der Zusatzarm 22 sind beweglich miteinander verbunden, beispielsweise hier über ein Drehgelenk 23. Der Hauptarm 21 ist mit einem ersten Ende 24 beweglich, hier beispielsweise drehbar, mit der Basis 13 verbunden. Der Zusatzarm 22 weist an einem zweiten dem ersten Ende gegenüberliegenden Ende 25 ein Werkzeug auf, bei dem es sich hier bevorzugt und ein Hubwerkzeug 30, hier ausgeführt als Vakuumhubwerkzeug, handelt. Die Basis 13 weist einen Antrieb (nicht dargestellt) auf mit dem es möglich ist, den Ausleger 20 bzw. den Hauptarm 21 beispielsweise um ein Drehgelenk 26 zu verschwenken. Der Antrieb kann dabei auf verschiedene Weisen ausgeführt sein. Es kann sich dabei um einen Elektroantrieb, einen Hydraulikantrieb, oder einen mechanischen Antrieb bzw. eine Kombination davon handeln. Beispielsweise kann es sich dabei auch um einen Federantrieb handeln. Der Antrieb kann auf verschiedene Weisen mit dem Ausleger 20 bzw. dem Hauptarm 21 verbunden sein. Bevorzugt ist hier, dass die Verbindung lösbar ist. Dadurch wird es möglich, den Ausleger 20 bzw. Hauptarm 21 manuell vom Bediener des Flurförderzeugs 100 zu verschwenken, beispielsweise um das Werkzeug bzw. Hubwerkzeug 30 in eine Arbeitsposition innerhalb eines Bereichs 300 um das Flurförderzeug 100 herum zu bewegen, der in Figur 3 straffiert dargestellt ist.

An dem Anbauelement 11 ist ein horizontales Ablageelement 14 vorgesehen, auf dem das Hubwerkzeug 30 in seiner Fahrposition beispielsweise anordbar ist. Bevorzugt befindet sich hier auch der Unterdrucksensor (nicht dargestellt) zur Überwachung der Ansaugung des Hubwerkzeugs 30. Das Hubwerkzeug 30 ist hier bevorzugt als Vakuumsystem vorgesehen. Es weist einen Vakuumerzeuger 31 auf, der über eine Leitung und einen Spiralschlauch (nicht dargestellt) mit einem Ansaugelement 32 verbunden ist. Der Vakuumschlauch ist in einem Teleskopelement 33 vorgesehen. Das Teleskopelement 33 fährt aus, wenn das Ansaugelement 32 beispielsweise nach unten auf eine Last 400, die bewegt werden soll, herabgezogen wird. Ist das Ansaugelement 32 auf der Last 400 angeordnet, wird über ein Betätigungselement (nicht dargestellt) der Vakuumerzeuger 31 in Betrieb genommen und das Ansaugelement 32 an der Last 400 mittels Unterdrucks befestigt. Gleichzeitig wird der Vakuumschlauch durch das auf ihn wirkende Vakuum zusammengezogen, so dass die Last entsprechend angehoben wird.

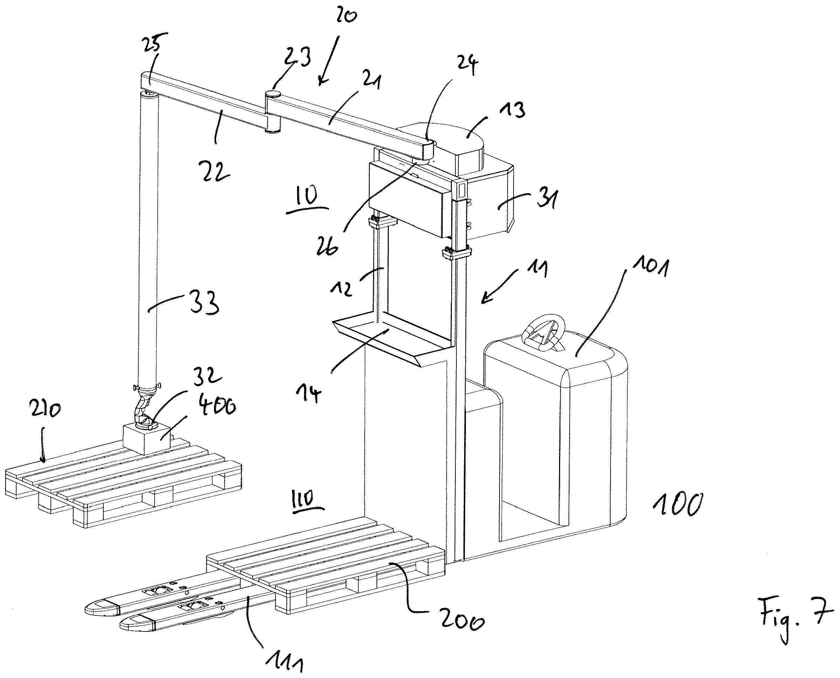

Nachdem das Hubwerkzeug 30 dann mit der Last 400 manuell durch verschwenken des Auslegers 20 bzw. des Hauptarms 21 und/oder Zusatzarms 22 beispielsweise zur auf den Gabeln 111 angeordneten Palette 200 bewegt wurde, kann die Last 400 durch nach unten Bewegen des Hubwerkzeugs 30 auf der Palette 200 abgesetzt werden. Durch Abschalten des Vakuumerzeugers 31 kann dann das Ansaugelement 32 von der Last 400 gelöst werden. Dieses ist in den Figuren 7 bis 9 dargestellt.

Ist der Ladevorgang abgeschlossen und soll das Flurförderzeug 100 zur nächsten Position verfahren werden, muss der Manipulator 10 in eine gesicherte Position beispielsweise parallel zu den Gabeln 111 gebracht werden, damit das Flurförderzeug 100 sicher gefahren werden kann, ohne dass der Manipulator 10 mit Personen oder Gegenständen unterwegs kollidieren kann. Dafür kann beispielsweise über ein Betätigungselement (nicht dargestellt) ein automatisierter/halbautomatischer Sicherungsvorgang eingeleitet werden. Es wird der in der Basis 13 vorgesehene Antrieb aktiviert, der den Ausleger 20 bzw. den Hauptarm 21 zwangsgeführt in eine gesicherte Position überführt. Dafür ist der nicht dargestellte Antrieb über ein nicht dargestelltes Verbindungselement mit dem Ausleger 20 bzw. dem Hauptarm 21 verbunden. Die Verbindung zwischen dem Antrieb und dem Ausleger 20 bzw. Hauptarm 21 ist dabei bevorzugt lösbar ausgeführt, damit zum einen die zwangsgeführte automatisierte Bewegung durchgeführt werden kann, aber zum anderen das Verschwenken des Auslegers 20 bzw. Hauptarms 21 beim Durchführen des Ladeprozesses vom Bediener manuell durchgeführt werden kann. Ist der Zwangsführungsprozess abgeschlossen und der Ausleger 20 bzw. Hauptarm 21 an der vorgegebenen gesicherten Position angekommen, wird der Bewegungsprozess für sich genommen eingestellt. Weiterhin kann zur Sicherung des Auslegers 20 bzw. des Hauptarms 21 eine Arretierung beispielsweise mit einem Sicherungselement durchgeführt werden. Der Ausleger 20 bzw. Hauptarm 21 ist jetzt gesichert, sodass der Fahrbetrieb durchgeführt werden kann. Eine rein manuelle Rückführung des Auslegers 20 in die gesicherte Position ist ebenfalls möglich.

Der Bediener muss jetzt noch den Zusatzarm 21 mit dem Hubwerkzeug 30 ebenfalls in eine gesicherte Position überführen. Diese Überführungsprozess wird im bevorzugten Ausführungsbeispiel manuell durchgeführt. Der Bediener schwenkt den Zusatzarm 21 beispielsweise durch Greifen des Hubwerkzeugs 30 um das Drehgelenk 23 bis das Hubwerkzeug 30 über dem Ablageelement 14 angekommen ist. Der Bediener setzt das Ansaugelement 32 des Hubelements 30 auf das Ablageelement 14 ab und aktiviert den Vakuumerzeuger 31, sodass das Ansaugelement 32 fest auf dem Ablageelement 14 angebracht ist.

Zusätzlich kann noch eine Sicherung (hier nicht dargestellt) am Gestell 12 des Anbauelements 11 vorgesehen sein, mit dem das Teleskopelement 33 gesichert wird, sodass es nicht schwingen kann. Ist auch das Ansaugelement 32 und damit auch der Zusatzarm 22 in gesicherter Position, ist der Manipulator 10 so gesichert, dass ein sicheres Fahren des Flurförderzeugs 100 möglich ist. Alternativ kann das überführen des Zusatzarms 22 und/oder des Hubwerkzeugs 30 in eine gesicherte Position zwangsgeführt automatisiert ausgeführt werden.

Bevorzugt ist weiterhin eine Steuerung vorgesehen, die mit dem nicht dargestellten Antrieb des Auslegers 20 bzw. Hauptarms 21 verbunden ist. Weiterhin ist auch das nicht dargestellte Betätigungselement, beispielsweise ein Taster, mit der Steuerung verbunden. Die Steuerung kann beispielsweise das Verbinden zwischen Antrieb und Ausleger 20 bzw. Hauptarm 21 beispielsweise durch das Auslösen einer Einkoppelbewegung einer Mechanik, dem Herstellen einer Magnetverbindung oder dergleichen initiiert werden.

Weiterhin kann in der Steuerung ein Bewegungsprofil hinsichtlich einer Geschwindigkeit der Zwangsbewegung hinterlegt sein, sodass beispielsweise die letzten 10 % des Weges mit einer niedrigeren Geschwindigkeit durchgeführt wird, bis der Ausleger 20 bzw. Hauptarm 21 in seiner finalen Position angekommen ist. Zusätzlich ist beispielsweise wenigstens ein Sensor (nicht dargestellt) im Endbereich der Sicherungsposition des Auslegers 20 bzw. Hauptarms 21 vorgesehen, über den die Steuerung ein Signal erhalten kann, dass der Ausleger 20 bzw. Hauptarm 21 seine gesicherte Position erreicht hat. Hierbei kann es sich beispielsweise in einem Kontaktsensor handeln.

Weiterhin ist bevorzugt auch ein Sensor (nicht dargestellt) vorgesehen, mit dem das Anliegen des Vakuums am Ansaugelement 32 auf dem Ablageelement 14 überwachbar ist. Bei diesen nicht dargestellten Sensor kann es sich beispielsweise um ein Unterdrucksensor handeln. Auch dieser Sensor ist bevorzugt mit der Steuerung verbunden. Hat die Steuerung den zwangsgeführten Halbautomatikprozess des Rückbewegens des Ausleger 20 bzw. Hauptarms 21 durchgeführt, und von dem Sensor die Mitteilung erhalten, dass der Ausleger 20 bzw. Hauptarm 21 in der gesicherten Position angekommen ist, und des Weiteren von dem Unterdrucksensor die Mitteilung erhalten, dass das Hubwerkzeug 30 durch Ansaugen des Anlageelements 32 am Ablageelement 14 ebenfalls gesichert ist, kann die Steuerung beispielsweise ein Signal an ein Sperrelement am Flurförderzeug 100 übermitteln und dieses freigeben, sodass das Flurförderzeug 100 wieder fahrbar ist. Meldet der Unterdrucksensor, dass der Unterdruck abbricht, kann beispielsweise auch ein Notstopp des Flurförderfahrzeugs 100 beispielsweise von der Steuerung bewirkt werden.

Weiterhin ist es vorteilhaft, dass am Flurförderzeug 100 ein Sensor zur Erfassung von Fahrbewegungen vorgesehen ist, der solange das Ansaugelement 32 in angesaugter Position auf dem Ablageelement 14 und den Ausleger 20 bzw. Hauptarm 21 in gesperrter Position beispielsweise über dem Ladebereich 110 sperrt, wie das Flurförderzeug 100 in Bewegung ist. Kommt das Flurförderzeug 100 zu einem Stopp, teilt der Sensor dieses der Steuerung mit, sodass diese die Sperren am Manipulator freigibt, sodass der Bediener das Hubwerkzeug 30 von dem Ablageelement 14 lösen kann und den Zusatzarm manuell verschwenken kann. Weiterhin gibt die Steuerung ebenfalls die Sperre des Ausleger 20 bzw. Hauptarms 21 frei und löst gegebenenfalls den Antrieb vom Ausleger 20 bzw. Zusatzarm 21, sodass dieser manuell um das jeweilige Drehgelenk 23, 26 verschwenkbar ist, und der Bediener das Ansaugelement 32 auf eine Last 400 aufsetzen kann, entweder in einem Lagerbereich, beispielsweise eine Palette 210, oder auf einer Palette 200, um die Last 400 anschließend zu bewegen.

## Patentansprüche

1. Manipulator (10) zum Anordnen an einem Fahrzeug (100), bevorzugt ein Flurförderzeug, insbesondere ein Kommissionierer, mit einem Anbauelement (11) zum Befestigen an dem Fahrzeug (100), mit wenigstens einem Ausleger (20), der mit einem ersten Ende (24) mit dem Anbauelement (11) verbunden ist, wobei der Ausleger (20) gegenüber dem Anbauelement (11) beweglich ausgeführt ist, mit wenigstens einem Werkzeug (30), das an einem zweiten, dem ersten Ende gegenüberliegenden Ende (25) des Auslegers (20) vorgesehen ist, **dadurch gekennzeichnet, dass** ein Bewegungsantrieb für den Ausleger (20) vorgesehen ist, der mit wenigstens einem Teil des Auslegers (20) so verbunden ist, dass mit dem Bewegungsantrieb der Teil des Auslegers (20) in eine gesicherte Position bewegbar ist, dass die Bewegung des Auslegers (20) in die gesicherte Position zwangsgeführt erfolgt und dass der Bewegungsantrieb vom Ausleger (20) trennbar ist, sodass der Ausleger (20) in einer vom Bewegungsantrieb getrennten Zustand durch den Bediener händisch antriebslos bewegbar ist.

2. Manipulator nach Anspruch 1, **dadurch gekennzeichnet, dass** das Werkzeug ein Vakuumsauggreifer ist, und dass wenigstens ein Unterdrucksensor vorgesehen ist, mit dem ein Arretieren des Vakuumsauggreifers an einer vorgegebenen Position erfassbar ist.

3. Manipulator nach Anspruch 1 oder 2, **dadurch gekennzeichnet, dass** es sich bei dem Ausleger (20) um einen Knickarm handelt, und dass der Knickarm wenigstens einen Hauptarm (21) und wenigstens einen daran beweglich gegenüber dem Hauptarm angeordneten Zusatzarm (22) aufweist.

4. Manipulator nach Anspruch 3, **dadurch gekennzeichnet, dass** das Werkzeug (30) an dem Zusatzarm (22) angeordnet ist.

5. Manipulator nach einem der Ansprüche 1 bis 4, **dadurch gekennzeichnet, dass** wenigstens ein Sensor vorgesehen ist, mit dem das Erreichen des Auslegers (20) in einer vorgegebenen Position erfassbar ist.

6. Manipulator nach einem der Ansprüche 1 bis 5, **dadurch gekennzeichnet, dass** wenigstens eine Steuerung vorgesehen ist, die so eingerichtet ist, dass die Steuerung anhand der Position des Auslegers (20) eine Fahrbarkeit des Fahrzeugs (100) sperrt oder frei gibt,

7. Manipulator nach Anspruch 6, **dadurch gekennzeichnet, dass** die Steuerung mit wenigstens einem Sensor nach Anspruch 5 verbunden ist.

8. Manipulator nach einem der Ansprüche 1 bis 7, **dadurch gekennzeichnet, dass** wenigstens eine Steuerung vorgesehen ist, die so eingerichtet ist, dass die Steuerung anhand der Arretierung des Werkzeugs (30) eine Fahrbarkeit des Fahrzeugs (100) sperrt oder freigibt.

9. Manipulator nach Anspruch 8, **dadurch gekennzeichnet, dass** die Steuerung mit wenigstens einem Unterdrucksensor verbunden ist.

10. Manipulator nach einem der Ansprüche 1 bis 9, **dadurch gekennzeichnet, dass** wenigstens ein Sensor vorgesehen ist, mit dem ein Fahrzustands des Fahrzeugs (100) erfassbar ist.

11. Manipulator nach einem der Ansprüche 1 bis 10, **dadurch gekennzeichnet, dass** wenigstens eine Steuerung vorgesehen ist, die so eingerichtet ist, dass die Steuerung anhand des Fahrzustands des Fahrzeugs (100) die Bewegbarkeit des Auslegers (20) und/oder des Werkzeugs (30) sperrt oder freigibt.

12. Manipulator nach Anspruch 11, **dadurch gekennzeichnet, dass** die Steuerung mit dem wenigstens einen Sensor nach Anspruch 10 verbunden ist.

13. Manipulator nach einem der Ansprüche 1 bis 12, **dadurch gekennzeichnet, dass** es sich bei dem Bewegungsantrieb um einen Elektroantrieb, einen hydraulischen Antrieb und/oder einen mechanischen Antrieb handelt.

14. Manipulator nach einem der Ansprüche 3 bis 13, **dadurch gekennzeichnet, dass** der Zusatzarm (22) gegenüber dem Hauptarm (21) durch den Bediener händisch antriebslos bewegbar ist.

15. Verfahren zum Bewegen und/oder Sichern eines Manipulators nach einem der Ansprüche 1 bis 14, in dem wenigstens ein Teil des Auslegers (20) mit einem Bewegungsantrieb verbunden wird, und in dem mit dem Bewegungsantrieb der Teil des Auslegers (20) zwangsgeführt in eine gesicherte Position zwangsgeführt bewegt wird, und/oder in dem das Werkzeug (30) an einer vorgegebenen Position an einer Oberfläche (14) angesaugt wird, und in dem das Ansaugen des Werkzeugs (30) an der einer vorgegebenen Position (14) mit wenigstens einem ein Unterdrucksensor erfasst wird.

## Claims

1. Manipulator (10) for arrangement on a vehicle (100), preferably an industrial truck, in particular an order picker, having an attachment element (11) for fastening to the vehicle (100), having at least one boom (20), a first end (24) of which is connected to the attachment element (11), wherein the boom (20) is movable with respect to the attachment element (11), having at least one tool (30) which is provided at a second end (25) of the boom (20) that is opposite the first end, **characterized in that** a movement drive is provided for the boom (20) and is connected to at least one part of the boom (20) in such a manner that the movement drive can be used to move that part of the boom (20) into a secure position, **in that** the boom (20) is moved into the secure position in a positively guided manner, and **in that** the movement drive can be disconnected from the boom (20), with the result that the boom (20) can be manually moved by the operator without a drive into a state disconnected from the movement drive.

2. Manipulator according to Claim 1, **characterized in that** the tool is a vacuum suction gripper, and **in that** at least one vacuum sensor is provided and can be used to capture locking of the vacuum suction gripper at a predefined position.

3. Manipulator according to Claim 1 or 2, **characterized in that** the boom (20) is an articulated arm, and **in that** the articulated arm has at least one main arm (21) and at least one additional arm (22) arranged thereon so as to be movable with respect to the main arm.

4. Manipulator according to Claim 3, **characterized in that** the tool (30) is arranged on the additional arm (22) .

5. Manipulator according to one of Claims 1 to 4, **characterized in that** at least one sensor is provided and can be used to capture when the boom (20) reaches a predefined position.

6. Manipulator according to one of Claims 1 to 5, **characterized in that** at least one controller is provided and is configured such that the controller blocks or enables drivability of the vehicle (100) on the basis of the position of the boom (20).

7. Manipulator according to Claim 6, **characterized in that** the controller is connected to at least one sensor according to Claim 5.

8. Manipulator according to one of Claims 1 to 7, **characterized in that** at least one controller is provided and is configured such that the controller blocks or enables drivability of the vehicle (100) on the basis of the locking of the tool (30).

9. Manipulator according to Claim 8, **characterized in that** the controller is connected to at least one vacuum sensor.

10. Manipulator according to one of Claims 1 to 9, **characterized in that** at least one sensor is provided and can be used to capture a driving state of the vehicle (100) .

11. Manipulator according to one of Claims 1 to 10, **characterized in that** at least one controller is provided and is configured such that the controller blocks or enables the movability of the boom (20) and/or of the tool (30) on the basis of the driving state of the vehicle (100) .

12. Manipulator according to Claim 11, **characterized in that** the controller is connected to the at least one sensor according to Claim 10.

13. Manipulator according to one of Claims 1 to 12, **characterized in that** the movement drive is an electric drive, a hydraulic drive and/or a mechanical drive.

14. Manipulator according to one of Claims 3 to 13, **characterized in that** the additional arm (22) can be manually moved by the operator without a drive with respect to the main arm (21).

15. Method for moving and/or securing a manipulator according to one of Claims 1 to 14, in which at least one part of the boom (20) is connected to a movement drive, and in which the movement drive is used to move that part of the boom (20) into a secure position in a positively guided manner, and/or in which the tool (30) is suctioned at a predefined position on a surface (14), and in which the suctioning of the tool (30) at the one predefined position (14) is captured using at least one vacuum sensor.

## Revendications

1. Manipulateur (10) destiné à être agencé sur un véhicule (100), de préférence un chariot de manutention, en particulier un préparateur de commandes, comprenant un élément de montage (11) destiné à être fixé sur le véhicule (100), comprenant au moins une flèche (20) qui est reliée par une première extrémité (24) à l'élément de montage (11), la flèche (20) étant réalisée mobile par rapport à l'élément de montage (11), comprenant au moins un outil (30) qui est prévu à une deuxième extrémité (25) de la flèche (20), opposée à la première extrémité, **caractérisé en ce qu'**il est prévu un mécanisme de déplacement de la flèche (20), qui est relié à au moins une partie de la flèche (20) de manière à ce que ladite partie de la flèche (20) puisse être déplacée à une position sécurisée au moyen du mécanisme de déplacement, **en ce que** le déplacement de la flèche (20) à la position sécurisée s'effectue par guidage forcé et **en ce que** le mécanisme de déplacement peut être séparé de la flèche (20) de manière à ce que, dans un état séparé du mécanisme de déplacement, la flèche (20) puisse être déplacée sans entraînement manuel par l'opérateur.

2. Manipulateur selon la revendication 1, **caractérisé en ce que** l'outil est une ventouse à vide, et **en ce qu'**il est prévu au moins un capteur de dépression qui permet de détecter un blocage de la ventouse à vide à une position prédéfinie.

3. Manipulateur selon la revendication 1 ou 2, **caractérisé en ce que** la flèche (20) est un bras articulé, et **en ce que** le bras articulé présente au moins un bras principal (21) et au moins un bras supplémentaire (22) disposé sur celui-ci de manière mobile par rapport au bras principal.

4. Manipulateur selon la revendication 3, **caractérisé en ce que** l'outil (30) est agencé sur le bras supplémentaire (22).

5. Manipulateur selon l'une des revendications 1 à 4, **caractérisé en ce qu'**il est prévu au moins un capteur permettant de détecter l'arrivée de la flèche (20) à une position prédéfinie.

6. Manipulateur selon l'une des revendications 1 à 5, **caractérisé en ce qu'**il est prévu au moins un dispositif de commande qui est conçu de manière à ce que le dispositif de commande bloque ou libère une possibilité de déplacement du véhicule (100) en fonction de la position de la flèche (20).

7. Manipulateur selon la revendication 6, **caractérisé en ce que** le dispositif de commande est relié à au moins un capteur selon la revendication 5.

8. Manipulateur selon l'une des revendications 1 à 7, **caractérisé en ce qu'**il est prévu au moins un dispositif de commande qui est conçu de telle sorte que le dispositif de commande bloque ou libère une possibilité de déplacement du véhicule (100) par arrêt de l'outil (30).

9. Manipulateur selon la revendication 8, **caractérisé en ce que** le dispositif de commande est relié à au moins un capteur de dépression.

10. Manipulateur selon l'une des revendications 1 à 9, **caractérisé en ce qu'**il est prévu au moins un capteur permettant de détecter un état de marche du véhicule (100) .

11. Manipulateur selon l'une des revendications 1 à 10, **caractérisé en ce qu'**il est prévu au moins un dispositif de commande qui est conçu de manière à ce que le dispositif de commande bloque ou libère la possibilité de déplacement de la flèche (20) et/ou de l'outil (30) sur la base de l'état de marche du véhicule (100).

12. Manipulateur selon la revendication 11, **caractérisé en ce que** le dispositif de commande est relié audit au moins un capteur selon la revendication 10.

13. Manipulateur selon l'une des revendications 1 à 12, **caractérisé en ce que** le mécanisme de déplacement est un mécanisme d'entraînement électrique, un mécanisme d'entraînement hydraulique et/ou un mécanisme d'entraînement mécanique.

14. Manipulateur selon l'une des revendications 3 à 13, **caractérisé en ce que** le bras supplémentaire (22) peut être déplacé sans entraînement manuel par l'opérateur par rapport au bras principal (21).

15. Procédé de déplacement et/ou de sécurisation d'un manipulateur selon l'une des revendications 1 à 14, dans lequel au moins une partie de la flèche (20) est reliée à un mécanisme de déplacement, et dans lequel ladite partie de la flèche (20) est déplacée à une position sécurisée par guidage forcé par le mécanisme de déplacement, et/ou dans lequel l'outil (30) est aspiré à une position prédéfinie sur une surface (14), et dans lequel l'aspiration de l'outil (30) à une position prédéfinie (14) est détectée par au moins un capteur de dépression.
